# EUROPEAN PATENT APPLICATION

(11) **EP 4 591 974 A1**
(43) Date of publication of application: **30.07.2025**
(21) Application number: 23909738.9
(22) Date of filing: 15.11.2023
(51) Int. Cl.: B01J 19/00, B01L 3/00

(54) **MICRO-FLUIDIC CHIP AND APPLICATION THEREOF**

(30) Priority: 26.12.2022 CN 202211671322
(71) Applicant: Shenzhen Yhlo Biotech Co., Ltd., Shenzhen, Guangdong 518116 (CN)
(72) Inventor: HUANG, Tianxun, Shenzhen, Guangdong 518116 (CN); WU, Liqiang, Shenzhen, Guangdong 518116 (CN); WANG, Gang, Shenzhen, Guangdong 518116 (CN); QIAN, Chungen, Shenzhen, Guangdong 518116 (CN)
(74) Representative: V.O.
(86) International application number: PCT/CN2023/131675
(87) International publication number: WO 2024/139806

(57) **Abstract**

The present application provides a micro-fluidic chip. The micro-fluidic chip includes an injection cavity, a first heating cavity, a second heating cavity, a collection cavity, micro-fluidic channels configured to be respectively connected to and in communication with the injection cavity, the first heating cavity, the second heating cavity and the collection cavity, and a heating mechanism. Based on the micro-fluidic chip of the present application, a traditional synthesis process is changed to be carried out on the micro-fluidic chip. Based on micro-fluidic fluid control technology, a reaction volume of each component is precisely controlled by designing a geometric structure of the micro-fluidic channels, and synthesis process parameters are controlled by laminar diffusion and micro mixing technology, thereby controlling a particle size and a uniformity of the magnetic nanoparticles. Compared the present application with a related synthesis method, the synthesis method of the micro-fluidic chip has characteristics that a solution is mixed uniformly, an agglomeration of the magnetic nanoparticles is reduced, an apparatus is simple, a required space is small, and a volume of a required solution is less.

## Description

### TECHNICAL FIELD

The present application relates to the field of micro-fluidic technology, and in particular, to a micro-fluidic chip and an application thereof.

### BACKGROUND

A magnetic nanoparticle refers to a particle with a size less than 100 nm and is mainly composed of metal oxides. Since physicochemical properties of a nanoparticle depend on its size and morphology, and it is particularly important to synthesize a nanoparticle with controllable size and morphology. As an important part of magnetic microspheres, a uniformity and a size of the magnetic nanoparticle significantly influence both a magnetic responsiveness and a particle size of magnetic beads.

Related methods of synthesizing the magnetic nanoparticle includes coprecipitation, microemulsion, thermal decomposition, and hydrothermal synthesis, and most of these methods synthesizes the magnetic nanoparticle by a physical mixing process, particle nucleation, particle growth, and particle formation in sequence. A size of the synthesized magnetic nanoparticle is controlled by changing reaction parameters. Due to complex process of related methods for synthesizing the nanoparticle, it is prone to leading to inconsistent local conditions during a synthesis process, which makes it difficult to control a particle uniformity and batch-to-batch variations.

### SUMMARY

Based on this, the present application provides a micro-fluidic chip and a method of synthesizing magnetic nanoparticles by using the micro-fluidic chip. The method can achieve a convenient and fast synthesis of the magnetic nanoparticles with a high uniformity, so as to solve technical problems of a complex process of related methods for synthesizing nanoparticles and difficulties in achieving uniformity of synthesized particles and batch-to-batch variations.

The present application provides the micro-fluidic chip:
the micro-fluidic chip includes a injection cavity, a first heating cavity, a second heating cavity, a collection cavity, micro-fluidic channels configured to be respectively connected to and in communication with the injection cavity, the first heating cavity, the second heating cavity and the collection cavity, and a heating mechanism.

The injection cavity includes a first injection cavity, a second injection cavity, a third injection cavity and a fourth injection cavity.

The first heating cavity, the second heating cavity and the collection cavity are in communication with each other in sequence by the micro-fluidic channels.

The first injection cavity and the second injection cavity are both located on an upstream of the first heating cavity and in communication with the first heating cavity.

The third injection cavity is connected to and in communication with one of the micro-fluidic channels connected to and in communication with the first heating cavity and the second heating cavity.

The fourth injection cavity is disposed on a downstream of the first heating cavity and an upstream of the second heating cavity, and the fourth injection cavity is in communication with the second heating cavity.

The heating mechanism is configured to individually heat the first heating cavity and the second heating cavity.

**In** an example, one of the micro-fluidic channels connected to and in communication with the first injection cavity and one of the micro-fluidic channels connected to and in communication with the second injection cavity are merged on the upstream of the first heating cavity and then are connected to and in communication with the first heating cavity.

**In** an example, one of the micro-fluidic channels connected to and in communication with the fourth injection cavity and the one of the micro-fluidic channels in communication with the first heating cavity and the second heating cavity are merged and then are connected to and in communication with the second heating cavity.

In an example, the one of the micro-fluidic channels connected to and in communication with the first heating cavity and the second heating cavity is serpentine-shaped.

In an example, a connecting position between the third injection cavity and the one of the micro-fluidic channels connected to and in communication with the first heating cavity and the second heating cavity is located on a most upstream of a bending portion of the one of the micro-fluidic channels connected to and in communication with the first heating cavity and the second heating cavity which is serpentine-shaped.

In an example, an inner part of the second heating cavity is provided with a plurality of sub cavities separated from each other. A solution entering the second heating cavity is capable of being heated by the plurality of sub cavities and converged into the collecting cavity.

In an example, the number of the plurality of sub cavities is in a range of six to ten. A width of each of the plurality of sub cavities is the same.

The present application further provides a method for synthesizing the magnetic nanoparticles. The method uses the above micro-fluidic chip to synthesize the magnetic nanoparticles.

In an example, the method for synthesizing the magnetic nanoparticles includes: adding a FeCl₃ solution and a FeCl₂ solution to the first injection cavity and the second injection cavity, respectively, adding a solution with a pH greater than 7 to the third injection cavity, and adding an oil phase to the fourth second injection cavity;
heating the first heating cavity and the second heating cavity; and
collecting a reaction product from the collection cavity.

In an example, in a step of heating the first heating cavity and the second heating cavity, a temperature of the first heating cavity is controlled in a range of 45 °C to 55 °C. A temperature of the second heating cavity is controlled in a range of 65 °C to 75 °C.

In an example, a injection speed of the first injection cavity is in a range of 0.4 mL/min to 0.6 mL/min. A injection speed of the second injection cavity is in a range of 0.2 mL/min to 0.3 mL/min. A injection speed of the third injection cavity is in a range of 0.4 mL/min to 0.6 mL/min. A injection speed of the fourth injection cavity is in a range of 0.5 mL/min to 1.5 mL/min.

In an example, the solution with a pH greater than 7 includes one or both of an ammonia solution with a volume concentration of 2% or a NaOH solution.

In an example, the oil phase includes one or both of liquid paraffin and silicone oil.

The present application further provides magnetic nanoparticles. The magnetic nanoparticles are obtained by the method for synthesizing the magnetic nanoparticles of any one of claims 8 to 12.

In the present application, a related synthesis method is transferred to a micro-fluidic chip. Based on micro-fluidic fluid control technology, synthesis process parameters are controlled by designing a geometric structure of the micro-fluidic channels., By precisely controlling a reaction volume of each component, and laminar diffusion and micro mixing technology, a particle size and a uniformity of the magnetic nanoparticles can be controlled. Compared with the related synthesis method, a synthesis method using the micro-fluidic chip has following advantages: firstly, the solution can be mixed more uniformly than related mechanical stirring by designing a mixing area on the micro-fluidic chip and changing from laminar flow to turbulent flow; secondly, the micro-fluidic chip can separate various stages of synthesizing the magnetic nanoparticles without being interfered with each other, which may reduce aggregation of the magnetic nanoparticles; thirdly, an apparatus required for the synthesis method using the micro-fluidic chip is simple, a required space is small, and a volume of a solution required for use is small, facilitating adjusting experimental conditions and being suitable for optimizing experimental conditions in an early stage; fourthly, by designing the micro-fluidic chip, multiple micro-fluidic chips can be cascaded to optimize multiple conditions while increasing a production yield.

### BRIEF DESCRIPTION OF THE DRAWINGS

FIG. 1 is a schematic diagram of a micro-fluidic chip.
FIG. 2 is a TEM diagram of a magnetic nanoparticle synthesized in a first example.
FIG. 3 is a TEM diagram of magnetic nanoparticles synthesized in a second example.
FIG. 4 is a TEM diagram of magnetic nanoparticles synthesized in a third example.
FIG. 5 is a TEM diagram of magnetic nanoparticles synthesized in a fourth example.
FIG. 6 is a TEM diagram of magnetic nanoparticles synthesized in a fifth example.
FIG. 7 is a TEM diagram of magnetic nanoparticles synthesized in a first comparative example.
FIG. 8 is a TEM diagram of magnetic nanoparticles synthesized in a second comparative example.
FIG. 9 is a TEM diagram of magnetic nanoparticles synthesized in a third comparative example.
FIG. 10 is a TEM diagram of magnetic nanoparticles synthesized in a fourth comparative example.

### DETAILED DESCRIPTION

A detailed explanation of the specific implementation of the present application will be provided below in combination with embodiments and examples. It should be understood that the embodiments and the examples are only used to illustrate the present application and not to limit a scope of the present application. The purpose of providing the embodiments and the examples is to make an understanding of a disclosed content of the present application more thorough and comprehensive. It should be understood that the present application can be implemented in many different forms, not limited to the embodiments and the examples described in the present application. Those skilled in the art can make various modifications or modifications without violating a spirit of the present application, and equivalent forms fall within the scope of protection of the prevent application. In addition, in the following description, a large number of specific details are provided to provide a more comprehensive understanding of the present application. It should be understood that the present application can be implemented without one or more of the details.

Unless otherwise defined, all technical and scientific terms used in the present application have the same meanings as those commonly understood by those skilled in the art of the present application.

### TERM

In the present application, "combination thereof", "any combination thereof', "any combination way thereof" includes all suitable combinations of any two or more of listed items.

In the present application, the term of "appropriate" in terms "appropriate combination way", "appropriate way", "any appropriate way" and so on should be based on an ability to implement a technical solution of the present application, to solve technical problems of the present application, and to achieve expected technical effects of the present application.

In the present application, the terms of "preferred", "better", "greater", and "appropriate" are only used to describe better implementation methods or examples, and it should be understood that not limiting the scope of protection of the present application.

In the present application, the term of "furthermore", "moreover", "in particular" and so on is configured to describe a purpose and indicate differences in content, and should not be understood as a limitation for the scope of the present application.

In the present application, when it relates to numerical intervals (i.e., numerical ranges), if there is no special description, alternative number ranged in the above numerical intervals is regarded as continuously and includes two number endpoints of the numerical intervals (i.e., maximum number and minimize number) and each number between the two number endpoints. If there is no special description, when the numerical ranges only point to integers within the number ranges, the number ranges include the two endpoints of the number ranges, as well as every integer between the two endpoints of the number ranges, and in the present application, which means that every integer is directly listed. For example, t is an integer selected from a range of one to ten, which means that t is an integer of any one of integer set consisted of 1, 2, 3, 4, 5, 6, 7, 8, 9 and 10. In addition, when multiple distinctive features or characteristics with ranges are provided, such ranges may be combined. In other words, unless otherwise defined, the plurality of ranges disclosed in the present application should be understood that all sub ranges in the plurality of ranges are included.

In the present application, technical features described in an open manner include both closed technical solutions composed of listed technical features and open technical solutions containing the listed features.

Micro-fluidic: microfluidics is manipulated via microchannels or even nanochannels to achieve micro reactions on chips, such that material synthesis and screening is processed via fewer reagents and samples.

TEM: Transmission Electron Microscope may observe a microstructure with a size less than 0.2 µm not capable of being clearly observed in an optical microscope. The microstructure may be called a submicroscopic structure or an ultrastructure. In order to clearly observe the microstructure, a wavelength of a light must be more short to improve a resolution of the microscope. In 1932, Ruska invented a transmission electron microscope with an electron beam as the light source. A wavelength of the electron beam is much shorter than that of visible light and ultraviolet light, and the wavelength of the electron beam is inversely proportional to a square root of a voltage for emitting the electron beam, which means that the higher the voltage, the shorter the wavelength. A resolution of the TEM may reach to 0.2 nm.

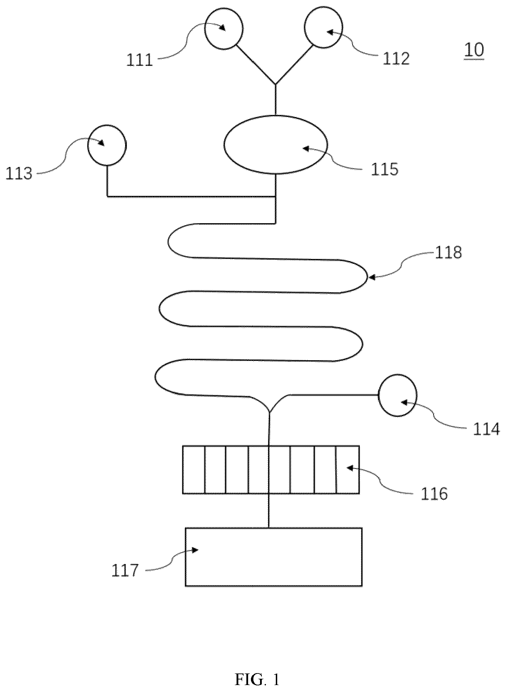

Referring to FIG. 1, the present application provides a micro-fluidic chip 10. The micro-fluidic chip 10 includes a injection cavity, a first heating cavity 115, a second heating cavity 116, a collection cavity 117, micro-fluidic channels 118 respectively connected to and in communication with the injection cavity, the first heating cavity 115, the second heating cavity 116 and the collection cavity 117, and a heating mechanism.

The injection cavity includes a first injection cavity 111, a second injection cavity 112, a third injection cavity 113 and the fourth injection cavity 114.

The first heating cavity 115, the second heating cavity 116 and the collection cavity 117 are connected to and in communication with each other in sequence by the micro-fluidic channels 118.

The first injection cavity 111 and the second injection cavity 112 are both disposed on an upstream of the first heating cavity 115 and in communication with the first heating cavity. A solution in the first injection cavity 111 and a solution of the second injection cavity 112 may mix first and then flow to the first heating cavity 115, or respectively flow to the first heating cavity 115 and then mix.

The third injection cavity 113 is in communication with a micro-fluidic channel 118 which is configured to be in communication with the first heating cavity 115 and the second heating cavity 116.

The fourth injection cavity 114 is disposed on a downstream of the first heating cavity 115 and an upstream of the second heating cavity 116. The fourth injection cavity 114 is connected to and in communication with the second heating cavity 116.

The heating mechanism is configured to individually heat the first heating cavity 115 and the second heating cavity 116.

In an embodiment, one of the micro-fluidic channels connected to and in communication with the first injection cavity 111 and one of the micro-fluidic channels connected to and in communication with the second injection cavity 112 are merged on the upstream of the first heating cavity 115 and then are connected to and in communication with the first heating cavity 115.

In an embodiment, one of the micro-fluidic channels 118 connected to and in communication with the fourth injection cavity 114 and one of the micro-fluidic channels 118 connected to and in communication with the first heating cavity 115 and the second heating cavity 116 are merged and then are connected to and in communication with the second heating cavity 116.

Optionally, the one of the micro-fluidic channels 118 connected to and in communication with the first heating cavity 115 and the second heating cavity 116 is serpentine-shaped.

In an embodiment, a connecting position between the third injection cavity 113 and the one of the micro-fluidic channels 118 connected to and in communication with the first heating cavity 115 and the second heating cavity 116 is disposed on a most upstream of a bending portion of the one of the micro-fluidic channels 118 connected to and in communication with the first heating cavity 115 and the second heating cavity 116 which is serpentine-shaped.

Optionally, an inner part of the second heating cavity 116 is provided with a plurality of sub cavities separated from each other. A solution entering the second heating cavity 116 may be heated by the plurality of sub cavities and converged into the collecting cavity 117.

In an embodiment, the number of the plurality of sub cavities is in a range of six to ten. A width of each of the plurality of sub cavities is the same. For example, the number of the plurality of sub cavities may be six, seven, eight, nine or ten.

The present disclosure further provides a method for synthesizing magnetic nanoparticles using the above micro-fluidic chip. The method includes adding a FeCl₃ solution and a FeCl₂ solution to the first injection cavity 111 and the second injection cavity 112, respectively, adding a solution with a pH greater than 7 to the third injection cavity 113, and adding an oil phase to the fourth second injection cavity 114.

The method further includes heating the first heating cavity and the second heating cavity 116, and obtaining a reaction product from the collection cavity 117.

In an example, in a step of heating the first heating cavity and the second heating cavity, a temperature of the first heating cavity 115 is controlled in a range of 45°C to 55°C. A temperature of the second heating cavity 116 is controlled in a range of 65°C to 75°C. For example, the temperature of the first heating cavity may be 45°C, 46°C, 47°C, 48°C, 49°C, 50°C, 51°C, 52°C, 53°C, 54°C, 55°C. For example, the temperature of the second heating cavity 116 may be 65°C, 66°C, 67°C, 68°C, 69°C, 70°C, 71°C, 72°C, 73°C, 74°C, 75°C.

In an example, an injection speed of the first injection cavity 111 is in a range of 0.4 mL/min to 0.6 mL/min, such as 0.4 mL/min, 0.5mL/min or 0.6 mL/min.

In an example, an injection speed of the second injection cavity 112 is in a range of 0.2 mL/min to 0.3 mL/min, such as 0.2 mL/min, 0.25 mL/min or 0.3 mL/min.

In an example, an injection speed of the third injection cavity 113 is in a range of 0.4 mL/min to 0.6 mL/min, such as 0.4 mL/min, 0.5 mL/min or 0.6 mL/min.

In an example, a injection speed of the fourth injection cavity 114 is in a range of 0.5 mL/min to 1.5 mL/min, such as 0.5 mL/min, 1 mL/min or 1.5 mL/min.

In an example, the solution with a pH greater than 7 includes one or both of ammonia solution with a volume concentration of 2% or a NaOH solution.

In an example, the oil phase includes one or both of liquid paraffin and silicone oil.

The present application further provides the magnetic nanoparticles. The magnetic nanoparticles are obtained by the method for synthesizing the magnetic nanoparticles of any one of claims 8 to 12.

The following will provide a detailed description of embodiments of the present application in combination with the examples. It should be understood that these examples are only used to illustrate the present application and not to limit the scope of the present application. Experimental methods in the following examples that do not specify specific conditions should be referred to guidelines provided in the application in priority, or followed by experimental manuals or conventional conditions in the field, or followed by conditions recommended by the manufacturer, or referred to known experimental methods in the field.

In following specific examples, when it relates to measurement parameters of raw material components, if there is no special description, it may have slight deviations within a weighing accuracy range. When it relates to a temperature and a time parameter, it may have slight deviations within an instrument testing accuracy or operational accuracy.

In the examples of the present application, a high concentration of iron salt is in a range of 0.5 M to 2 M. A middle concentration of iron salt is in a range of 0.05 M to 0.2 M. A low concentration of iron salt is in a range of 0.005 M to 0.02 M.

A high concentration of NaOH is in a range of 0.5 M to 2 M. A low concentration of NaOH is in a range of 0.05 M to 0.2 M. In an ammonia solution, a volume concentration of ammonia is in a range of 1% to 5%.

Example 1: a low concentration of iron salt, a low concentration of ammoniand, and an oil phase enveloping.

Step 1, FeCl₃·6H₂O and FeCl₂·4H₂O are weighed to prepare 0.01 M of a FeCl₃ solution and 0.01 M of a FeCl₂ solution, respectively. 0.1 M of FeCl₃ solution was injected into a first injection cavity at a rate of 0.5 mL/min by a precision injection pump. 0.1 M of FeCl₂ solution was injected into a second injection cavity at a rate of 0.25 mL/min by the precision injection pump. The FeCl₃ solution and the FeCl₂ solution were mixed in the first heating cavity. The first heating cavity was provided with a heat pad, and a mixed solution was heated to 50 °C.

Step 2, ammonia solution with a volume concentration of ammonia being 2% flowing through the third injection cavity at a rate of 0.5 mL/min was mixed with the mixed solution in the first heating cavity at a rate of 2 : 1, which was fully mixed in a serpentine-shaped micro-fluidic channel, and an oil phase flowed to the fourth injection cavity at a rate of 1 mL/min, thereby forming a mixture of FeCl₃ solution, FeCl₂ solution and NaOH solution. Droplets would form two velocity fields in opposite directions during a generating process of the droplets, and FeCl₃ solution, FeCl₂ solution and ammonia solution would be mixed in an inner part of the droplets.

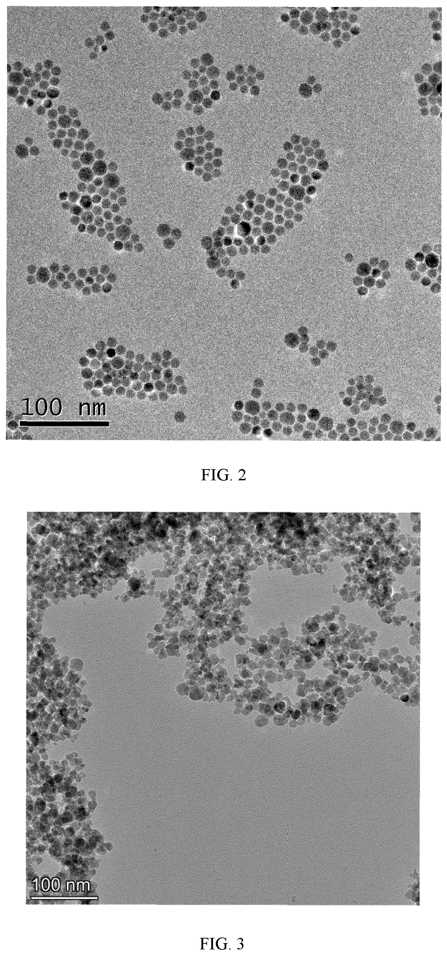

Step 3, the mixture was fully mixed and then uniformly entered to eight channels of the second heating cavity, so as to ensure the mixture to be uniformly heated. A bottom of the second heating cavity was provided with a heating element, so that a temperature of the second heating cavity increases to 70 °C. Then the droplets passed through the eight channels. Magnetic nanoparticles were collected. A TEM diagram of the magnetic nanoparticles was shown in FIG. 2.

Example 2: a low concentration of iron salt, a low concentration of NaOH, and an oil phase enveloping.

Step 1, FeCl₃·6H₂O and FeCl₂·4H₂O are weighed to prepare 0.01 M of a FeCl₃ solution and 0.01 M of a FeCl₂ solution, respectively. 0.1 M of FeCl₃ solution was injected into a first injection cavity at a rate of 0.5 mL/min by a precision injection pump.0.1 M of FeCl₂ solution was injected into a second injection cavity at a rate of 0.25 mL/min by the precision injection pump. FeCl₃ solution and FeCl₂ solution were mixed in the first heating cavity. The first heating cavity was provided with a heat pad, and a mixed solution was heated to 50 °C.

Step 2, 0.1 mol/L of NaOH solution flowing through the third injection cavity at a rate of 0.5 mL/min was mixed with the mixed solution in the first heating cavity at a rate of 2 : 1, which was fully mixed in a serpentine-shaped micro-fluidic channel, and an oil phase flowed to the fourth injection cavity at a rate of 1 mL/min, thereby forming a mixture of FeCl₃ solution, FeCl₂ solution and NaOH solution. Droplets would form two velocity fields in opposite directions during a generating process of the droplets, and FeCl₃ solution, FeCl₂ solution and NaOH solution would be mixed in an inner part of the droplets.

Step 3, the mixture was fully mixed and then uniformly entered to eight channels of the second heating cavity, so as to ensure the mixture to be uniformly heated. A bottom of the second heating cavity was provided with a heating element, so that the temperature of the second heating cavity increases to 70 °C. Then the droplets passed through the eight channels. Magnetic nanoparticles were collected. A TEM diagram of the magnetic nanoparticles was shown in FIG. 3.

Example 3: a middle concentration of iron salt, a high concentration of NaOH, and an oil phase enveloping.

Step 1, FeCl₃·6H₂O and FeCl₂·4H₂O are weighed to prepare a 0.1 M of a FeCl₃ solution and a 0.1 M of a FeCl₂ solution, respectively. 0.1 M of FeCl₃ solution was injected into a first injection cavity at a rate of 0.5 mL/min by a precision injection pump. 0.1 M of FeCl₂ solution was injected into a second injection cavity at a rate of 0.25 mL/min by the precision injection pump. FeCl₃ solution and the FeCl₂ solution were mixed in the first heating cavity. The first heating cavity was provided with a heat pad, and a mixed solution was heated to 50 °C.

Step 2, 1 mol/L of NaOH solution flowing through the third injection cavity at a rate of 0.5 mL/min was mixed with the mixed solution in the first heating cavity at a rate of 2 : 1, which was fully mixed in a serpentine-shaped micro-fluidic channel, and an oil phase flowed to the fourth injection cavity at a rate of 1 mL/min, thereby forming a mixture of FeCl₃ solution, FeCl₂ solution and NaOH solution. Droplets would form two velocity fields in opposite directions during a generating process of the droplets, and FeCl₃ solution, FeCl₂ solution and NaOH solution would be mixed in an inner part of the droplets.

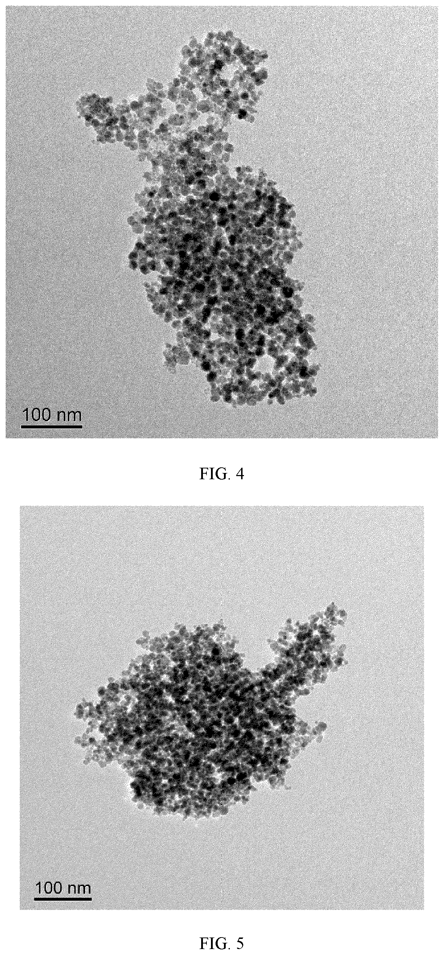

Step 3, the mixture was fully mixed and then uniformly entered to eight channels of the second heating cavity, so as to ensure the mixture to be uniformly heated. A bottom of the second heating cavity was provided with a heating element, so that the temperature of the second heating cavity increases to 70 °C. Then the droplets passed through the eight channels. Magnetic nanoparticles were collected. A TEM diagram of the magnetic nanoparticles was shown in FIG. 4.

Example 4: a middle concentration of iron saltand a high concentration of NaOH.

Step 1, FeCl₃·6H₂O and FeCl₂·4H₂O are weighed to prepare a 0.1 M of a FeCl₃ solution and a 0.1 M of a FeCl₂ solution, respectively. 0.1 M of FeCl₃ solution was injected into a first injection cavity at a rate of 0.5 mL/min by a precision injection pump. 0.1 M of FeCl₂ solution was injected into a second injection cavity at a rate of 0.25 mL/min by the precision injection pump. FeCl₃ solution and FeCl₂ solution were mixed in the first heating cavity. The first heating cavity was provided with a heat pad, and a mixed solution was heated to 50 °C.

Step 2, 1 mol/L of NaOH solution flowing through the third injection cavity at a rate of 0.25 mL/min was mixed with the mixed solution in the first heating cavity at a rate of 1 : 1, which was fully mixed in a serpentine-shaped micro-fluidic channel, a mixture of FeCl₃ solution, FeCl₂ solution and NaOH solution was formed.

Step 3, the mixture was fully mixed and then uniformly entered to eight channels of the second heating cavity, so as to ensure the mixture to be uniformly heated. A bottom of the second heating cavity was provided with a heating element, sothat a temperature of the second heating cavity increases to 70 °C. Then droplets passed through the eight channels. Magnetic nanoparticles were collected. A TEM diagram of the magnetic nanoparticles was shown in FIG. 5.

Example 5: a high concentration of iron salt and a high concentration of NaOH.

Step 1, FeCl₃·6H₂O and FeCl₂·4H₂O are weighed to prepare a 0.5 M of a FeCl₃ solution and a 0.5 M of a FeCl₂ solution, respectively. 0.1 M of FeCl₃ solution was injected into a first injection cavity at a rate of 0.5 mL/min by a precision injection pump. 0.1 M of FeCl₂ solution was injected into a second injection cavity at a rate of 0.25 mL/min by the precision injection pump. FeCl₃ solution and FeCl₂ solution were mixed in the first heating cavity. The first heating cavity was provided with a heat pad, and a mixed solution was heated to 50 °C.

Step 2, 1 mol/L of NaOH solution flowing through the third injection cavity at a rate of 0.5 mL/min was mixed with the mixed solution in the first heating cavity at a rate of 2 : 1, which was fully mixed in a serpentine-shaped micro-fluidic channel, a mixture of FeCl₃ solution, FeCl₂ solution and NaOH solution was formed.

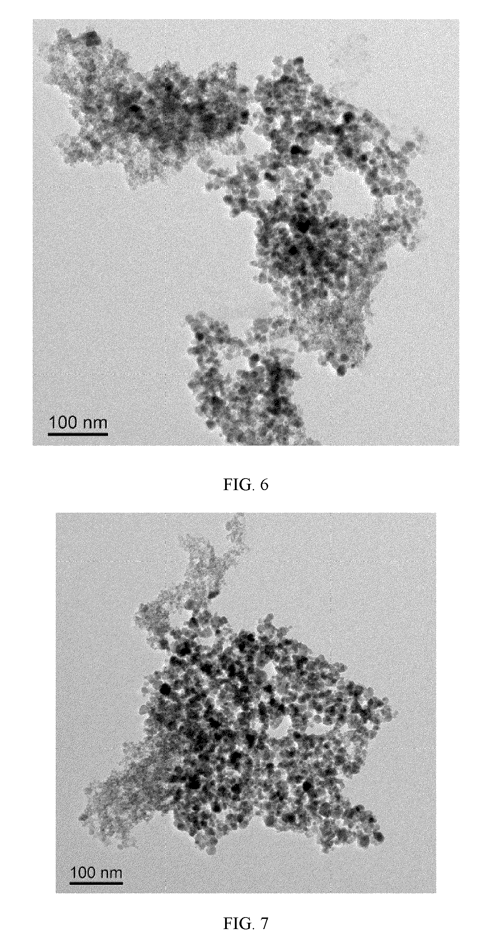

Step 3, the mixture was fully mixed and then uniformly entered to eight channels of the second heating cavity, so as to ensure the mixture to be uniformly heated. A bottom of the second heating cavity was provided with a heating element, a temperature of the second heating cavity increases to 80 °C. Then droplets passed through the eight channels. Magnetic nanoparticles are collected. A TEM diagram of the magnetic nanoparticles was shown in FIG. 6.

Comparative example 1: a high concentration of iron salt and a high concentration of NaOH.

Step 1, FeCl₃·6H₂O and FeCl₂·4H₂O are weighed to prepare a 0.5 M of a FeCl₃ solution and a 0.5 M of a FeCl₂ solution, respectively.

Step 2, NaOH was weighed to prepare 1 M of NaOH solution.

Step 3, 10 mL of FeCl₂ solution, 20 mL of FeCl₃ solution were added to a three necked flask with a volume of 250 mL, which was stirred under a magnetic force, 1 M of NaOH solution was dropped to the three necked flask and then stirred at a stirring speed of 400 rpm until a solution mixed by FeCl₂ solution, FeCl₃ solution and NaOH solution became black, and a pH of the solution was about 11.

Step 3, the three necked flask was transferred to an oil bath, a temperature of the oil bath increased to 70 °C, which was stirred at 1200 rpm for 1 hour.

Step 4, the solution mixed by FeCl₂ solution, FeCl₃ solution and NaOH solution was transferred to a centrifuge tube with a volume of 50 mL. Magnetic nanoparticles were separated by a magnetic rack, which was cleaned once with anhydrous ethanol and once with deionized water. The magnetic nanoparticles were obtained. A TEM diagram of the magnetic nanoparticles was shown in FIG. 7.

Comparative example 2: a middle concentration of iron salt and a high concentration of NaOH.

Step 1, FeCl₃·6H₂O and FeCl₂·4H₂O are weighed to prepare a 0.1 M of a FeCl₃ solution and a 0.1 M of a FeCl₂ solution, respectively.

Step 2, NaOH was weighed to prepare 1 M of NaOH solution.

Step 3, 10 mL of FeCl₂ solution, 20 mL of FeCl₃ solution were added to a three necked flask with a volume of 250 mL, which was stirred under a magnetic force, 1 M of NaOH solution was dropped to the three necked flask and then stirred at a stirring speed of 400 rpm until a solution mixed by the FeCl₂ solution, the FeCl₃ solution and the NaOH solution became black, and a pH of the solution was about 11.

Step 3, the three necked flask was transferred to an oil bath, a temperature of the oil bath was raised to 70 °C, which was stirred at 1200 rpm for 1 hour.

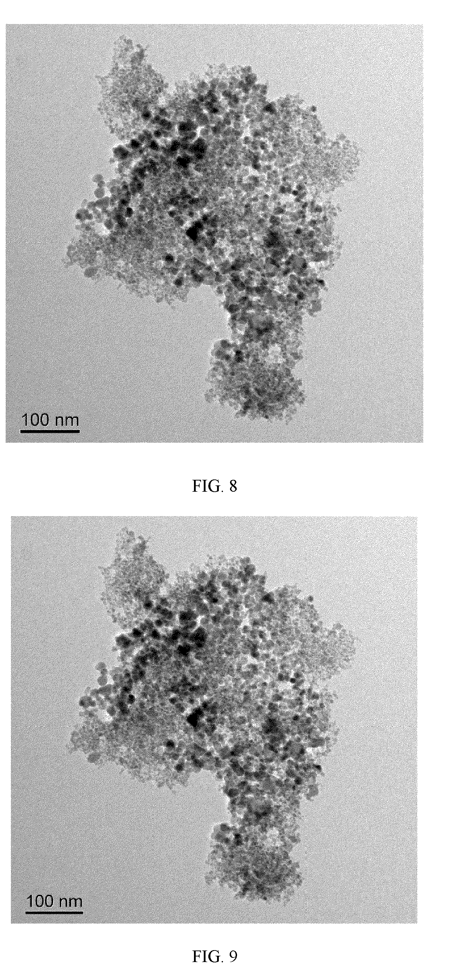

Step 4, the solution mixed by the FeCl₂ solution, the FeCl₃ solution and the NaOH solution became black was transferred to a centrifuge tube with a volume of 50 mL. Magnetic nanoparticles were separated by a magnetic rack, which was cleaned once with anhydrous ethanol and once with deionized water. The magnetic nanoparticles were obtained. A TEM diagram of the magnetic nanoparticles was shown in FIG. 8.

Comparative example 2: a middle concentration of iron salt and a high concentration of NaOH

Step 1, some FeCl₃·6H₂O and FeCl₂·4H₂O are weighed to prepare a 0.1 M of a FeCl₃ solution and a 0.1 M of a FeCl₂ solution, respectively.

Step 2, some NaOH was weighed to prepare 1 M of NaOH solution.

Step 3, 10 mL of FeCl₂ solution, 20 mL of FeCl₃ solution were added to a three necked flask with a volume of 250 mL, which was stirred under a magnetic force, 1 M of NaOH solution was dropped to the three necked flask and then stirred at a stirring speed of 400 rpm until a solution mixed by the FeCl₂ solution, the FeCl₃ solution and the NaOH solution became black, and a pH of the solution was about 11.

Step 4, the three necked flask was transferred to an oil bath, a temperature of the oil bath was raised to 70 °C, which was stirred at 1200 rpm for 1 hour.

Step 5, the solution mixed by FeCl₂ solution, FeCl₃ solution and NaOH solution became black was transferred to a centrifuge tube with a volume of 50 mL. Magnetic nanoparticles were separated by a magnetic rack, which is cleaned once with anhydrous ethanol and once with deionized water. The magnetic nanoparticles were obtained. A TEM diagram of the magnetic nanoparticles was shown in FIG. 7.

Comparative example 3: a middle concentration of iron salt and a middle concentration of NaOH.

Step 1, FeCl₃·6H₂O and FeCl₂·4H₂O are weighed to prepare 0.1 M of a FeCl₃ solution and a 0.1 M of a FeCl₂ solution, respectively.

Step 2, NaOH was weighed to prepare 1 M of NaOH solution.

Step 3, 10 mL of FeCl₂ solution, 20 mL of FeCl₃ solution were added to a three necked flask with a volume of 250 mL, which was stirred under a magnetic force, 0.1 M of NaOH solution was dropped to the three necked flask and stirred at a stirring speed of 400 rpm until a solution mixed by FeCl₂ solution, FeCl₃ solution and NaOH solution became black, and a pH of the solution was about 11.

Step 4, the three necked flask was transferred to an oil bath, a temperature of the oil bath was raised to 70°C, which was stirred at 1200 rpm for 1 hour.

Step 5, the solution mixed by FeCl₂ solution, FeCl₃ solution and NaOH solution was transferred to a centrifuge tube with a volume of 50 mL. Magnetic nanoparticles were separated by a magnetic rack, which is cleaned once with anhydrous ethanol and once with deionized water. The magnetic nanoparticles were obtained. A TEM diagram of the magnetic nanoparticles was shown in FIG. 9.

Comparative example 4: a low concentration of iron salt and a low concentration of ammonia.

Step 1, FeCl₃·6H₂O and FeCl₂·4H₂O are weighed to prepare 0.01 M of a FeCl₃ solution and 0.01 M of a FeCl₂ solution, respectively.

Step 2, 10 mL of FeCl₂ solution, 20 mL of FeCl₃ solution were added to a three necked flask with a volume of 250 mL, which was stirred under a magnetic force, ammonia with a volume concentration of 2% was dropped to the three necked flask and stirred at a stirring speed of 400 rpm until a solution mixed by FeCl₂ solution, FeCl₃ solution and ammonia solution became black, and a pH of the solution was about 11.

Step 3, the three necked flask was transferred to an oil bath, a temperature of the oil bath was raised at 70°C, which was stirred at 1200 rpm for 1 hour.

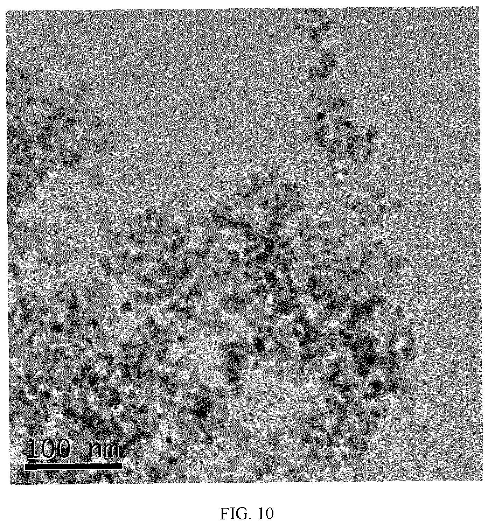

Step 4, the solution mixed by FeCl₂ solution, FeCl₃ solution and ammonia solution was transferred to a centrifuge tube with a volume of 50 mL. Magnetic nanoparticles were separated by a magnetic rack, which was cleaned once with anhydrous ethanol and once with deionized water. The magnetic nanoparticles were obtained. A TEM diagram of the magnetic nanoparticles was shown in FIG. 10.

According to results of the above experiments, by using synthesis method of the micro-fluidic chip and optimizing conditions of the experiments (such as the concentration of iron salts and the type and concentration of added alkali), the magnetic nanoparticles were synthesized with uniform particle size and good dispersion. However, the corresponding ordinary synthesis method results in poor particle size uniformity and dispersion of synthesized microspheres.

The above examples only express several embodiments of the present application, facilitating understanding a solution of the present application more specific and detailed, but should not be understood as limiting the scope of the present application. It should be pointed out that for ordinary skill in the art, several modifications and improvements can be made without departing from the concept of the application, which are within the scope of protection of the application. In addition, it should be understood, after reading the above teaching content of the application, the skilled in the art can make various modifications or modifications to the application, and an equivalent form of the present application also falls within the scope of protection of the application. It should be understood that the technical solutions obtained by the skilled in the art through logical analysis, reasoning, or limited experiments based on the technical solution provided in the application are all within the scope of protection of the claims attached to the present application. Therefore, the scope of protection of the patent application shall be subject to the content of the appended claims, and the specification and drawings may be used to interpret the content of the claims.

## Claims

1. A micro-fluidic chip, **characterized by** comprising an injection cavity, a first heating cavity, a second heating cavity, a collection cavity, micro-fluidic channels configured to be respectively connected to and in communication with the injection cavity, the first heating cavity, the second heating cavity and the collection cavity, and a heating mechanism;
wherein the injection cavity comprises a first injection cavity, a second injection cavity, a third injection cavity and a fourth injection cavity;
the first heating cavity, the second heating cavity and the collection cavity are in communication with each other in sequence by the micro-fluidic channels;
the first injection cavity and the second injection cavity are both disposed on an upstream of the first heating cavity and in communication with the first heating cavity;
the third injection cavity is connected to and in communication with one of the micro-fluidic channels connected to and in communication with the first heating cavity and the second heating cavity;
the fourth injection cavity is disposed on a downstream of the first heating cavity and an upstream of the second heating cavity, the fourth injection cavity is in communication with the second heating cavity; and
the heating mechanism is configured to individually heat the first heating cavity and the second heating cavity.

2. The micro-fluidic chip of claim 1, wherein one of the micro-fluidic channels connected to and in communication with the first injection cavity and one of the micro-fluidic channels connected to and in communication with the second injection cavity are merged on the upstream of the first heating cavity and then are connected to and in communication with the first heating cavity.

3. The micro-fluidic chip of claim 1, wherein one of the micro-fluidic channels connected to and in communication with the fourth injection cavity and the one of the micro-fluidic channels in communication with the first heating cavity and the second heating cavity are merged and then are connected to and in communication with the second heating cavity.

4. The micro-fluidic chip of claim 1, wherein the one of the micro-fluidic channels connected to and in communication with the first heating cavity and the second heating cavity is serpentine-shaped.

5. The micro-fluidic chip of claim 4, wherein a connecting position between the third injection cavity and the one of the micro-fluidic channels connected to and in communication with the first heating cavity and the second heating cavity is located on a most upstream of a bending portion of the one of the micro-fluidic channels connected to and in communication with the first heating cavity and the second heating cavity which is serpentine-shaped.

6. The micro-fluidic chip of claim 1, wherein an inner part of the second heating cavity is provided with a plurality of sub cavities separated from each other, and a solution entering the second heating cavity is capable of being heated by the plurality of sub cavities and converged into the collecting cavity.

7. The micro-fluidic chip of claim 6, wherein the number of the plurality of sub cavities is in a range of six to ten;
optionally, a width of each of the plurality of sub cavities is the same.

8. A method for synthesizing magnetic nanoparticles, **characterized by** using the micro-fluidic chip of any one of claims 1 to 7 to synthesizing the magnetic nanoparticles.

9. The method of claim 8, comprising:
adding a FeCl₃ solution and a FeCl₂ solution to the first injection cavity and the second injection cavity, respectively, adding a solution with a pH greater than 7 to the third injection cavity, and adding an oil phase to the fourth injection cavity;
heating the first heating cavity and the second heating cavity; and
collecting a reaction product from the collection cavity.

10. The method of claim 9, wherein in a step of heating the first heating cavity and the second heating cavity, a temperature of the first heating cavity is controlled in a range of 45 °C to 55 °C, and a temperature of the second heating cavity is controlled in a range of 65 °C to 75 °C.

11. The method of claim 9, where an injection speed of the first injection cavity is in a range of 0.4 mL/min to 0.6 mL/min, an injection speed of the second injection cavity is in a range of 0.2 mL/min to 0.3 mL/min, an injection speed of the third injection cavity is in a range of 0.4 mL/min to 0.6 mL/min, and an injection speed of the fourth injection cavity is in a range of 0.5 mL/min to 1.5 mL/min.

12. The method of any one of claims 9 to 11, wherein the solution with a pH greater than 7 comprises one or both of an ammonia solution with a volume concentration of 2% or a NaOH solution ; and
the oil phase comprises one or both of liquid paraffin and silicone oil.

13. Magnetic nanoparticles, **characterized by** being obtained by the method for synthesizing the magnetic nanoparticles of any one of claims 8 to 12.
